# EUROPEAN PATENT APPLICATION

(11) **EP 3 984 635 A1**
(43) Date of publication of application: **20.04.2022**
(21) Application number: 20201619.2
(22) Date of filing: 13.10.2020
(51) Int. Cl.: B01J 23/22, B01J 35/04, B01J 37/02, B01J 19/32

(54) **METHOD FOR THE MANUFACTURE OF A PLATE CATALYST**

(71) Applicant: Johnson Matthey Catalysts (Germany) GmbH, 96257 Redwitz an der Rodach (DE); Johnson Matthey Public Limited Company, London EC4A 4AB (GB)
(72) Inventor: ALCOVE CLAVE, Silvia, Reading RG4 9NH (GB); BRANDMAIR, Maria Theresia, 96257 Redwitz (DE); KNORR, Tilman, 96257 Redwitz (DE)
(74) Representative: Wilson, Nicola Ann

(57) **Abstract**

The present invention relates to a method for the manufacture of a plate catalyst useful for purifying exhaust gases from coal plants and other power plants where mercury emissions occur. The method comprises: providing a mesh support; providing a vanadium-free catalyst-support paste; providing a vanadium-containing solution; laminating the vanadium-free catalyst-support paste onto the mesh support to provide a laminate having first and second opposite surfaces; spraying the vanadium-containing solution onto the first and second surfaces to form a spray-coated laminate; shaping and dividing the spray-coated laminate into a plurality of plate precursors; and drying and calcining the plurality of plate precursors to form a plate catalyst. The invention further relates to an apparatus for the manufacture of a plate catalyst.

## Description

The present invention relates to a method and an apparatus for the manufacture of a plate catalyst. The method of the present invention produces plate catalysts of consistent quality that have improved activity for NOx conversion and oxidation of mercury but reduced activity for undesired side reactions, such as the oxidation of sulphur dioxide to sulphur trioxide. The catalyst produced according to the method of the present invention is useful for all applications where improved selectivity between NOx conversion and sulphur oxidation is desired. The catalyst produced according to the method of the present invention is particularly useful for purifying exhaust gases from coal plants and other power plants where mercury emissions occurs.

Catalysts containing vanadium deposited on titanium-dioxide are known and used as catalysts for oxidation of mercury and removal of nitrogen oxides. Known methods of forming such vanadium containing catalysts are described below.

EP 0 317 875 A2 discloses a SCR catalyst for NOx reduction, which is prepared by a process comprising: depositing a specific titanium dioxide (TiO₂) obtained by flame hydrolysis on a ceramic or metal support, subsequently drying and calcining, followed by impregnating with solutions of tungsten and at least one metal of vanadium, iron, niobium and molybdenum at a specific atomic ratio, and subsequently drying and calcining.

US 7,842,644 B2 is directed to a catalyst for oxidation of mercury, wherein the catalyst contains a molybdenum and vanadium complex oxide as the main component and is formed by placing the molybdenum and vanadium complex oxide in layers only on the surface of a plate-like or honeycomb-like porous carrier.

US 4,977,127 refers to a catalyst for denitrizing nitrogen oxides contained in waste gases in the presence of arsenic compounds. In the catalyst, the vanadium is concentratedly contained in the surface layer of the catalyst up to 200µm in depth from the surface layer of the catalyst in concentrations of at least 1.5 times as much as the concentration of vanadium throughout the catalyst. The catalyst is prepared by a method, wherein titanium dioxide is molded into a desired shape, the mold is immersed in or impregnated with an aqueous solution or dispersion of vanadium compounds, the mold is taken out of the solution or dispersion, and then immediately dried in a short time, followed by calcining. In the examples of US 4,977,127, oxalic acid and ammonium metavanadate are added to water to prepare an aqueous solution of the vanadium compound.

EP20275067.5 titled Catalyst for Mercury Oxidation filed on 27 March 2020 refers to a method for the preparation of a shell type catalyst for mercury oxidation, the catalyst and the use of the catalyst. The catalyst is prepared by a method comprising mixing titanium dioxide, a compound of a promoter selected from molybdenum and tungsten, and a binder, to prepare a paste; shaping the paste, to obtain a shaped paste; drying and optionally calcining the shaped paste, to obtain a support material; impregnating the support material with an aqueous alkaline impregnation solution comprising a vanadium compound; drying and calcining the impregnated support material, to obtain the catalyst. The catalyst is useful for purifying exhaust gases from coal plants and other power plants where mercury emissions occurs.

It is desirable to provide an improved method for producing a plate catalyst to tackle at least some of the problems associated with the prior art or, at least, to provide a commercially viable alternative thereto. It is particularly desirable to provide a method of manufacturing a plate catalyst that has improved activity for NOx conversion and oxidation of mercury with reduced activity for undesired side reactions, such as the oxidation of sulphur dioxide to sulphur trioxide, the method being able to produce plate catalysts of consistent quality and being technically easy to perform and able to be run in production or industrial scale.

According to a first aspect the present invention relates to a method for the manufacture of a plate catalyst, the method comprising:
providing a mesh support;
providing a vanadium-free catalyst-support paste;
providing a vanadium-containing solution;
laminating the vanadium-free catalyst-support paste onto the mesh support to provide a laminate having first and second opposite surfaces;
spraying the vanadium-containing solution onto the first and second surfaces to form a spray-coated laminate;
shaping and dividing the spray-coated laminate into a plurality of plate precursors; and
drying and calcining the plurality of plate precursors to form a plate catalyst.

The inventors have surprisingly found that improved NOx activity and mercury oxidation activity can be achieved without increasing activity of sulphur dioxide oxidation by only providing vanadium near the surfaces of each plate precursors forming plate catalyst. The higher concentration of vanadium at the surfaces promotes the oxidation of mercury and NOx conversion, since both reactions are mass transfer limited. In contrast, the undesired oxidation of sulphur dioxide to sulphur trioxide is not mass transfer limited but takes place in the entire cross-section of each plate precursor. Thus, by providing a high concentration of vanadium at the surfaces of each plate precursor forming the plate catalyst, the overall loading of vanadium can be reduced thus reducing the activity of the undesired side reactions without compromising the activity of mercury oxidation and NOx conversion. The method of the present invention produces a plate catalyst having a higher concentration of vanadium proximal to the surfaces of each plate precursor, since the method requires spray coating the laminate with a vanadium-containing solution.

Methods involving repeated dipping of the catalyst plates into a vanadium containing solution (impregnation), such as in EP20275067.5 discussed above, lead to changes in the concentration of the vanadium solution and, therefore, a product of varying quality. The inventors have surprisingly found that by instead spraying the laminate with a vanadium containing solution rather than dipping into a vanadium containing solution ensures that the concentration of vanadium applied to the plate precursors forming the plate catalyst is maintained at the same level. Accordingly, the plate catalysts produced according to the method of the present invention are consistent in quality.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The method comprises providing a mesh support. The mesh support is a supporting structure. The mesh support is preferably an expanded structure providing a plurality of regular openings orthogonal to its planar surfaces. The mesh support is preferably planar and has first and second opposing major surfaces. The mesh support is preferably metallic and may be formed of, for example, stainless steel. The mesh support may be roughened for enabling adhesion of the vanadium-free catalyst-support paste thereto. One way of roughening the mesh support is by spray coating molten metal, such as aluminium, onto its surface.

The method comprises providing a vanadium-free catalyst-support paste and laminating the paste onto the mesh support. By laminating it is meant that the vanadium-free catalyst-support paste is applied to form a substantially flat sheet of the paste on and around the mesh support. The vanadium-free catalyst-support paste preferably comprises one or more components selected from (i) a support material, preferably TiO₂, (ii) an organic binder, preferably cellulose, (iii) an inorganic binder, preferably clay, (iv) ammonia, (v) water, and (vi) a pore former, preferably ammonia carbonate or polymer particles. The vanadium-free catalyst-support paste is vanadium-free and so does not comprises any vanadium (except unavoidable impurities).

When the support is titanium dioxide, the titanium dioxide used is preferably a titanium dioxide of high surface area. Most preferably, titanium dioxide in form of anatase is used. The rutile form is less preferred due to its commonly lower surface area. The amount of titanium dioxide is at least 60 wt%, at least 70 wt%, in particular at least 80 wt%, based on 100 wt% of the catalyst. Preferably titanium dioxide is used in the range of from 60 to 95 wt%, more preferably in the range of from 70 to 90 wt%, most preferably in the range of from 80 to 90 wt%, based on 100 wt% of the catalyst.

Suitable inorganic binders and organic binders are known to the person skilled in the art. Exemplary inorganic binders are selected from clays, e.g. bentonite or kaolin. Exemplary organic binders are e.g. polyethylene oxide or cellulose. The total amount of the one or more binders is preferably in the range of from 1 to 20 parts by weight, more preferably of from 2 to 15 parts by weight, most preferably of from 3 to 10 parts by weight, based on 100 parts by weight of the support material.

The vanadium-free catalyst-support paste is preferably laminated onto the mesh support with at least one pair of opposing rollers. The paste is preferably coated over at least 80% of the surface area of the mesh support, more preferably over the entire surface area of the mesh support. The rollers preferably apply pressure to the mesh support to push the paste into the openings formed in the mesh support such that the paste blocks/fills the openings formed in the mesh support.

A preferred vanadium-free catalyst-support paste comprises 2-10 wt% fibers, such as glass fibers, 5-15 wt% fillers, such as clays, 0.1-5 wt% of a promoter, such as MoO₃ and 80 to 90 wt% of support material, such as TiO₂. The vanadium-free catalyst-support paste may further comprise organic binders and organic substances in an amount of 5-15 wt% of the total wt% of the composition to adjust rheology in order to achieve good lamination.

A preferred vanadium-free catalyst-support paste comprises 3-5 wt% fibers, such as glass fibers, 9-11 wt% fillers, such as clays, 0.1-2 wt% of a promoter, such as MoO₃ and 82 to 86 wt% of support material, such as TiO₂. The vanadium-free catalyst-support paste may further comprise organic binders and organic substances in an amount of 9-11 wt% of the total wt% of the composition to adjust rheology in order to achieve good lamination.

The method comprises providing a vanadium-containing solution and spraying the vanadium-containing solution onto the first and second surfaces to form a spray-coated laminate. The vanadium-containing solution preferably comprises vanadyl sulphate or vanadyl oxylate and water. The vanadium-containing solution preferably consists of water and a vanadium compound, such as vanadyl sulphate or vanadyl oxylate. The vanadium-containing solution may comprise vanadium in an amount of 5-15 wt% of the total wt% of the vanadium-containing solution.

By spray coating the vanadium-containing solution onto the laminate rather than forming the laminate using a vanadium containing paste, the vanadium is concentrated near the surface of the laminate. As discussed above, the oxidation of mercury and NOx conversion reactions are both mass transfer limited over the temperature range typically employed for use of a plate catalyst. Therefore, by concentrating vanadium near the surface, the overall loading of vanadium can be reduced without reducing the NOx activity and mercury oxidation activity. By reducing the overall loading of vanadium, the activity of the undesired side reaction of oxidation of sulphur dioxide to sulphur dioxide are reduced, since these reactions are not mass transfer limited but takes place in the entire body of the plate catalyst. Furthermore, by spray-coating the vanadium containing solution onto the laminate rather than dipping the laminate into a vanadium-containing the solution (impregnation), the concentration of vanadium applied to the plate precursors of the plate catalyst is maintained at the same level. This leads to production of plate precursors, and thus plate catalysts, that are consistent in quality.

Preferably, the first and second surfaces are arranged substantially vertically during the step of spraying. The direction of travel of the mesh support may be horizontal or vertical. By having the first and second surfaces arranged vertically both faces will retain the spray-coating to an equal extent.

The step of shaping the laminate preferably involves notching so that the plate precursors can be stacked in a configuration whereby cavities are maintained between adjacent plate precursors. Indeed, the notching forms notches or ridges that function as spacers thereby maintaining the cavities/space between the adjacent plate precursors. The notches or ridges formed in the plate precursors are preferably "v", "u" or "n" shaped. Preferably, each plate precursor comprises a convex notch (i.e. "n" shaped") adjacent to a concave notch (i.e. "v" or "u" shaped) forming a shape of a wave. The step of shaping the laminate may be performed by passing the laminate through a notching tool which may comprise protrusions configured to form the notches/ridges in the laminate as the laminate passes therethrough.

It will be appreciated that the spray-coated laminate can be divided into a variable number of plate precursors of varying sizes. The plate precursors are subdivided portions of the spray-coated laminate. Typically, the plate precursors are uniform in shape and size. Typically, each plate precursor has a width of at least 150 mm, preferably 200-600 mm, more preferably 350-500 mm, most preferably 400-470 mm. Typically, each plate precursor has a length of at least 300 mm, preferably at least 400 mm, more preferably 350 mm to 800 mm, most preferably 400 mm- 700mm..

The method preferably comprises stacking and securing the plurality of plate precursors before drying and calcining. The plate precursors may be stacked on top of each other such that the notches or ridges formed during shaping are aligned so as to maintain cavities/gaps between adjacent plate precursors. The plate precursors may be stacked in a frame, preferably an element frame, which is known in the art. The frame typically holds the plate precursors in position. The frame typically has an inlet on an inlet side and an outlet on an outlet side for passage of gas flow therethrough. The inlet side and outlet side are typically parallel to each other and perpendicular to the plane of the plate precursors positioned therebetween. For each plate precursor, typically one or more of its edges, preferably those proximal to the inlet and outlet sides, are bent to be approximately perpendicular to the plane of the plate precursor in order to stack the plate precursor within the frame while maintaining the cavities between the plate precursors. The plate precursors are stacked so that the cavities maintained by the notches/ridges are formed between the major planar surfaces of adjacent plate precursors in the direction orthoganol to the plane of the plate precursors. This construction results in a catalyst with very high mechanical strength and resistance to the abrasive dusts that are found in some exhaust streams.

The step of drying may be performed in a range from 10 to 72 hours, preferably of from 15 to 48 hours, in particular from 20 to 30 hours. In a most preferred embodiment, the step of drying is performed for at least 24 hours. The step of drying is typically performed at a temperature in the range of from 10°C to 150°C. In a preferred embodiment, the drying is carried out at 10°C to 40°C, preferably of from 15°C to 30°C, more preferably of from 20°C to 25°C. In a most preferred embodiment, the drying is carried out at room temperature. In other embodiments, the drying may be carried out at higher temperatures in the range of from 40°C to 150°C, preferably of from 50°C to 130°C, for example by using heated air. The step of calcining may be performed in the range of 400°C to 700°C, in particular in the range of from 500°C to 650°C. The calcining step may be carried out for a time period in the range of from 0.5 to 5 hours, in particular in the range of from 0.5 to 3 hours, preferably 1 to 3 hours.

According to a further aspect there is provided a plate catalyst obtainable by the method described herein. The plate catalyst is formed by a plurality of plate precursors. The plate precursors have a coating of vanadium on each of their major planar surfaces proximal to the surface. Each coating preferably penetrates to a depth of approximately 100 µm from the surface, preferably less than 200 µm so that vanadium is not present in the body of the plate precursor forming the plate catalyst and preferably more than 50 µm so that there is a sufficient amount of vanadium for good catalytic activity. Preferably, for each plate precursor forming the plate catalyst, the coating of vanadium penetrates to a depth of 75 to 125 µm from the surface.

According to a further aspect there is provided an apparatus for the manufacture of the plate catalyst according to any of the preceding claims, the apparatus comprising:
a pair of opposing rollers for receiving the mesh support;
a supply feed for applying the vanadium-free catalyst-support paste to the mesh support upstream of the rollers;
   a drier to dry the laminate downstream of the rollers;
   a pair of opposing spray-applicators to apply the vanadium-containing solution onto opposite surfaces of the laminate downstream of the drier;
   a notching tool for notching the spray-coated laminate;
   a cutting tool for cutting the spray-coated laminate; and
   an oven for drying and calcining the plate precursors to form the plate catalyst.

All features disclosed in relation to the method above apply equally to the apparatus as described herein.

The mesh support may be continually moved through the apparatus from the pair of opposing rollers to the oven. The movement of the mesh support through the apparatus may be driven by the pair of opposing rollers. The apparatus may comprise one or more additional opposing pairs of rollers to drive movement of the mesh support through the apparatus. The one or more additional opposing pairs of rollers may be positioned anywhere between the supply feed and the oven. The mesh support may be moved through the apparatus at a speed of approximately up to 10 m/min, such as 0.5 to 5 m/min, preferably 1 to 3 m/min, most preferably 2 to 3 m/min.

The supply feed may comprise a reservoir for storing the vanadium-free catalyst-support paste. The supply feed typically comprises a nozzle for dispensing the vanadium-free catalyst-support paste onto the pair of opposing rollers.

The cutting tool may be downstream of the notching tool. Alternatively, the cutting tool may be upstream of the notching tool.

The invention will now be described further with reference to the following figures:

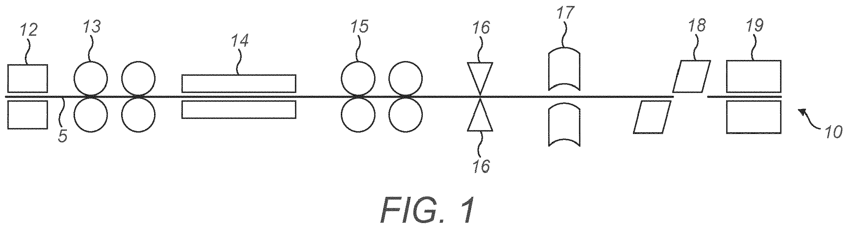

Figure 1 is a schematic diagram of a sectional view of an apparatus for the manufacture of the plate catalyst according to the present invention.

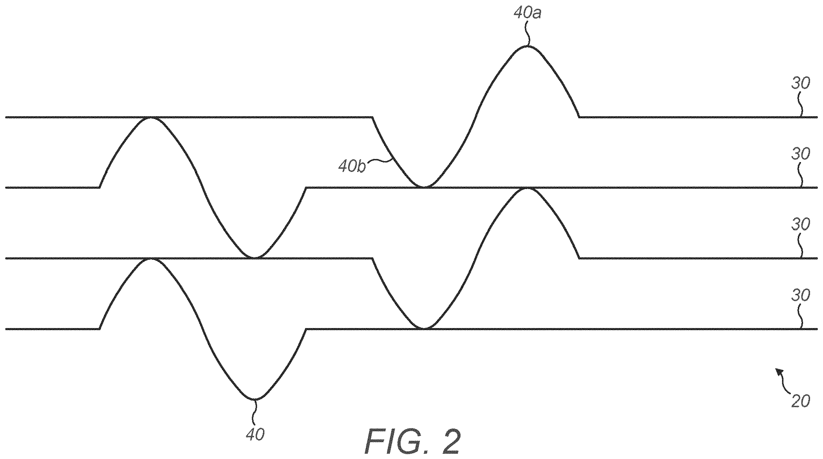

Figure 2 is a schematic diagram of a cross-section of a plate catalyst manufactured in accordance with the method of the present invention.

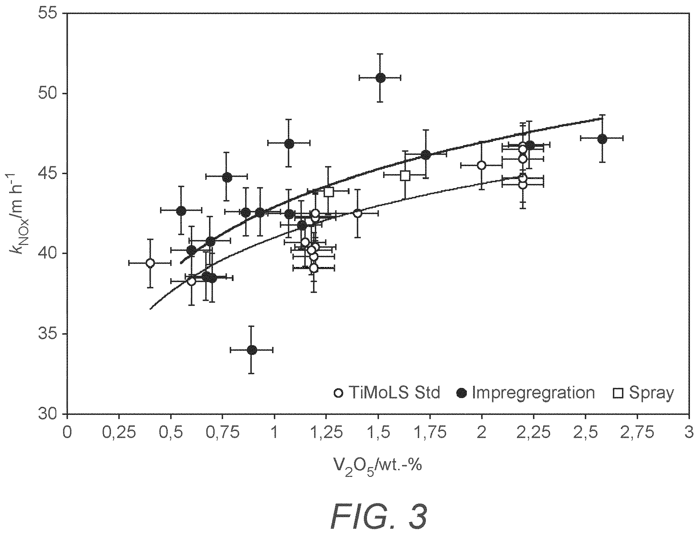

Figure 3 is a graph of wt% of V₂O₅ against NOx activity (kNOx) for a catalyst formed according to the method of the present invention. Figure 3 also includes comparative data for a plate catalyst where vanadium is applied by impregnation (dipping) and comparative data for a plate catalyst formed by the use of a vanadium containing paste.

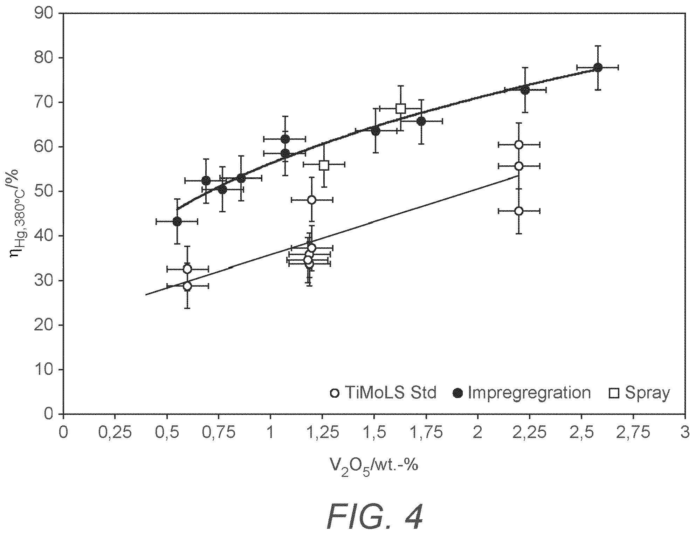

Figure 4 is a graph of wt% of V₂O₅ against mercury oxidation activity for a catalyst formed according to the method of the present invention. Figure 4 also includes, by way of comparative examples, data for a plate catalyst where vanadium is applied by impregnation (dipping) and data for a plate catalyst formed by the use of a vanadium containing paste.

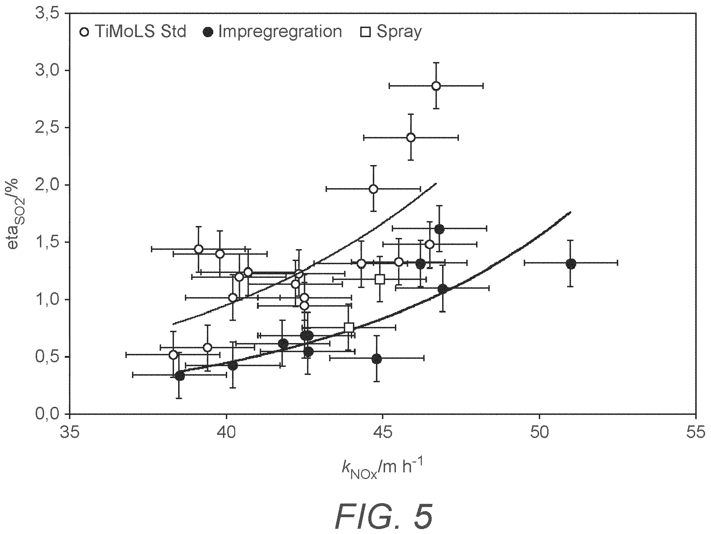

Figure 5 is a graph of NOx activity against sulphur dioxide oxidation activity for a plate catalyst formed according to the method of the present invention. Figure 5 also includes, by way of comparative examples, data for a plate catalyst where vanadium is applied by impregnation (dipping) and data for a plate catalyst formed by the use of a vanadium containing paste.

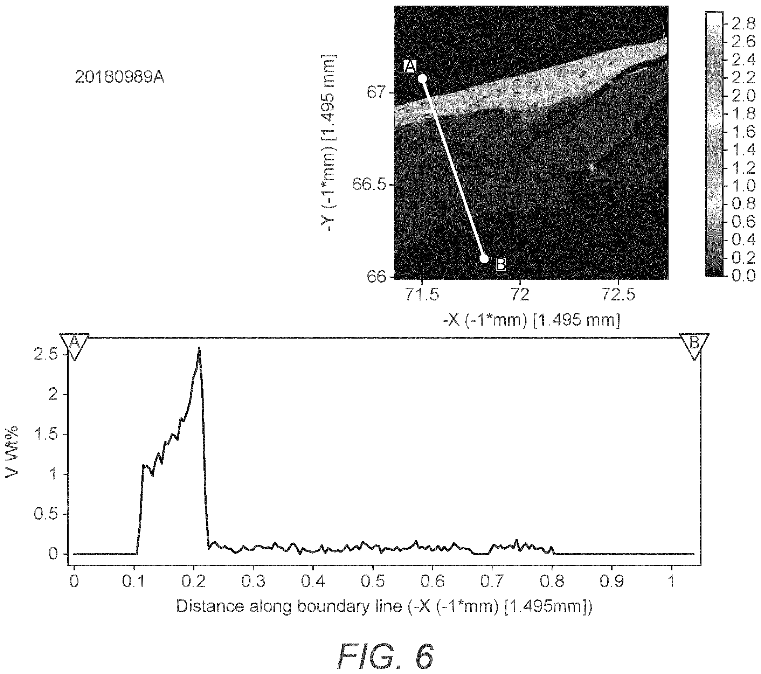

Figure 6 is a spectra indicating the loading of vanadium relative to the distance from the outer surface of the plate precursor formed according to the present invention where the vanadium-containing solution employed is undiluted vanadium sulphate solution.

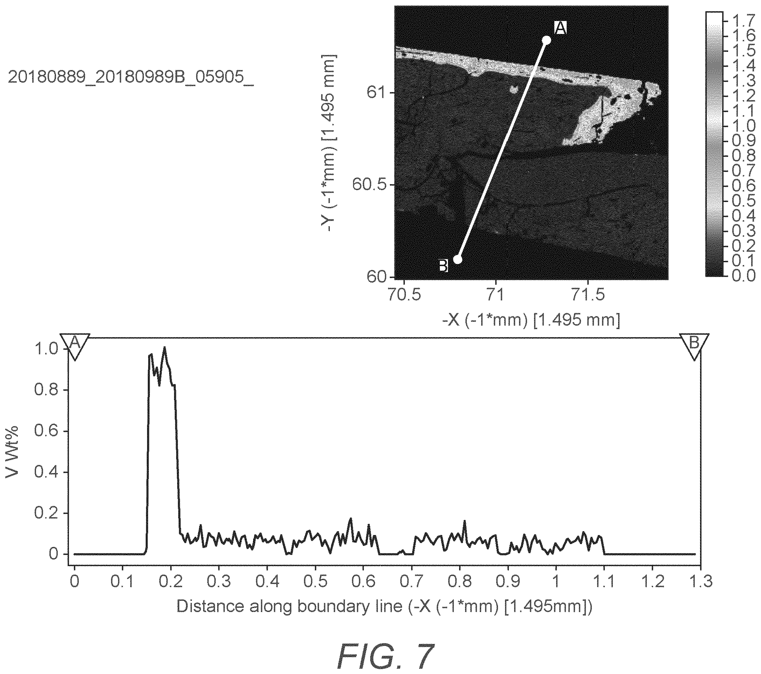

Figure 7 is a spectra indicating the loading of vanadium relative to the distance from the outer surface of the plate precursor formed according to the present invention where the vanadium-containing solution employed is diluted vanadium sulphate solution where the ratio of vanadium sulphate to water is 1:1.

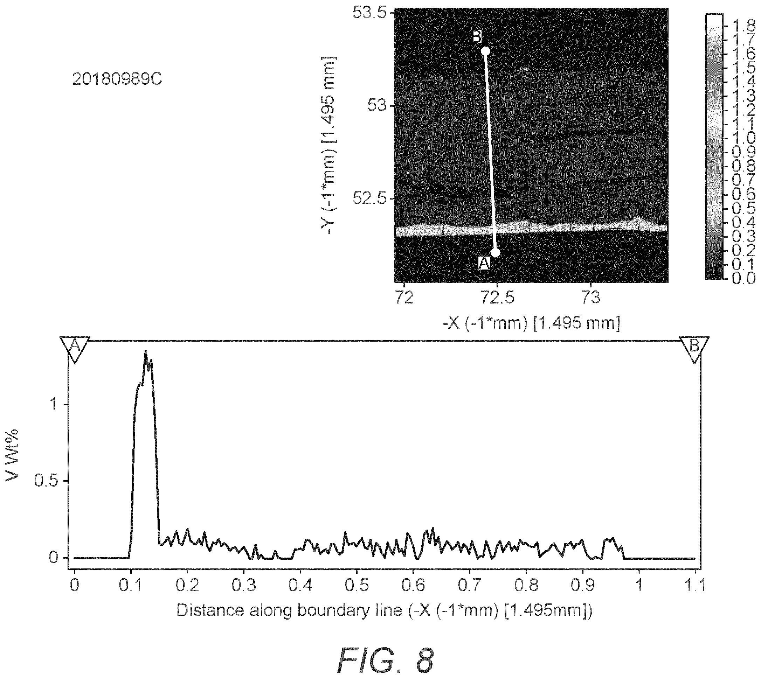

Figure 8 is a spectra indicating the loading of vanadium relative to the distance from the outer surface of the plate precursor formed according to the present invention where the vanadium-containing solution employed is diluted vanadium sulphate solution where the ratio of vanadium sulphate to water is 2:1.

Figure 1 shows an apparatus 10 for the manufacture of the plate catalyst in accordance with the invention. As the mesh support moves through the apparatus 10, it is transformed into a laminate and the plate precursors. For ease of reference in Figure 1, the mesh support, the laminate, the spray-coated laminate and the plate precursors in the continuous process are all indicated by reference 5.

The apparatus 10 comprises a supply feed 12 for applying the vanadium-free catalyst-support paste to the mesh support 5. The supply feed 12 comprises a dispenser (not shown) for application of the vanadium-free catalyst-support paste to the mesh support 5. The dispenser may comprise or be fluidly coupled to a reservoir (not shown) for storing the vanadium-free catalyst-support paste prior to application. The apparatus 10 comprises a first pair of opposing rollers 13 downstream of the supply feed 12 which are configured to receive the mesh support 5 therebetween. The pair of opposing rollers 13 coat the vanadium-free catalyst-support paste onto both the first and second surfaces of the mesh 5, pushing the paste into the openings in the mesh support 5 to form the laminate. The first pair of opposing rollers 13 move the laminate 5 towards the drier 14 downstream of the rollers 13. The drier 14 configured to dry the laminate 5 as it moves therethrough.

In the preferred embodiment shown in Figure 1, the apparatus comprises a second pair of opposing rollers 15. The second pair of rollers 15 are provided downstream of the drier 14 and configured to drive the moment of the laminate 5 therethrough and towards the opposing spray-applicators 16 that are downstream of the drier 14. The spray applicators 16 are arranged on either side of the mesh support 5 and such that the direction of the spray is orthoganol to the plane of the mesh support 5. The spray applicators 16 comprise nozzles (not shown) and are configured to spray a vanadium-containing solution onto the opposing planar surfaces of the laminate 5. The spray applicators 16 may comprise or be fluidly coupled to a reservoir (not shown) for storing the vanadium-containing solution prior to application.

The apparatus comprises a notching tool 17 and a cutting tool 18 downstream of the spray applicators 16. The notching tool 17 is configured to form notches in the spray-coated laminate 5, which are shown in Figure 3 and discussed in further detail below. The cutting tool 18 is configured to cut the spray-coated laminate to divide the spray-coated laminate into plate precursors. The cutting tool 18 is shown as being downstream of the notching tool 16 in Figure 1 but may instead be upstream of the notching tool 17.

An oven 19 is provided downstream of the cutting tool 18 for drying and calcining the plate precursors. Optionally, a stacking tool (not shown) may be provided upstream of the oven 18 for stacking and securing the plurality of plate precursors.

In use, the mesh support 5 is preferably moved continuously through the apparatus driven by the one or more pairs of opposing rollers 13, 15.

Although not shown in Figure 1, the second pair of opposing rollers 15 may be configured to rotate the laminate such that the first and second opposing planar surfaces of the laminate are vertically positioned during spraying of the vanadium-containing solution.

Figure 2 shows a plate catalyst 20 formed according to the method of the present invention. As shown in Figure 2, the plate catalyst 20 comprises plate precursors 30 stacked on top of each other such that the plate precursors 30 are parallel to each other. Each plate precursor 30 comprises notches 40 that maintain cavities 50 between adjacent plate precursors 30. The cavities extend in the direction orthogonal to the plane of the plate precursors 30. In this preferred embodiment, each plate precursor comprises a convex notch 40a and a concave notch 40b that are adjacent to each other thereby forming a wave shape. Each plate precursor 30 has their notches 40 laterally spaced apart from the notches 40 of the adjacent plate precursor 30. Each plate precursor 30 has their notches 40 aligned with the notches 40 of the alternate plate precursor 30.

The invention will now be described further in relation to the following non-limiting examples.

### Examples 1 and 2

Examples 1 and 2 were prepared according to the method of the present invention. In more detail, Examples 1 and 2 were prepared by applying a vanadium-free catalyst-support paste to a mesh support formed of stainless steel and laminating the vanadium-free catalyst-support paste onto the mesh support using a pair of opposing rollers. The laminate was then sprayed with a vanadium-containing solution. The spray-coated laminate was then shaped to form convex and concave notches, as shown in Figure 2, and divided into a plurality of plate precursors. The plurality of plate precursors were stacked and secured together and then dried and calcined. The plurality of plate precursors were dried at room temperature for 48 hours and calcined for one hour at 580 °C.

The vanadium-free catalyst-support paste employed to produce the plate catalyst of Example 1 comprised 4.5 wt.% glass fiber, 10 wt.% clay (Bentonite), 1 wt.% MoO₃ and 84.5 wt.% TiO₂ precursors (Anatase). While the foregoing items already total 100% it will be appreciated that this mixture can be diluted with organic binders and organic substances in an amount of 10 wt% of the total wt% of the composition to adjust rheology in order to achieve good lamination. The vanadium-containing solution used to produce the plate catalyst of Example 1 was a vanadium sulfate solution consisting of vanadium sulfate and water. The vanadium-containing solution comprised 9.97 wt% vanadium. [The plate catalyst of Example 1 comprised 81.2 wt% TiO₂ which forms the support material, 1.01 wt% MoO₃, 1.63 wt% V₂O₅ and inorganic binder and glass fibres in a balance amount. The inorganic binder and glass fibers are provided for reinforcement. The plate catalyst of Example 1 had a BET surface area of 74.8 m²/g, a pore volume of 362 mm³/g, a mean pore radius of 300 Angstroms, a porosity of 49.5 % and a plate thickness of 0.82 mm.

The vanadium-free catalyst-support paste employed to produce the plate catalyst of Example 2 was the same as the vanadium-free catalayst-support paste employed in Example 1. The vanadium-containing solution used to produce the plate catalyst of Example 2 was a vanadium oxalate solution consisting of vanadium oxalate and deionized water. The vanadium-containing solution comprised 6.58 wt% vanadium. The plate catalyst of Example 2 comprised 81.5 wt% TiO₂ which formed the support material, 1.01 wt% MoO₃, 1.26 wt% V₂O₅ and inorganic binder and glass fibres in a balance amount. The inorganic binder and glass fibers are provided for reinforcement. The plate catalyst of Example 2 had a BET surface area of 85.1 m²/g, a pore volume of 371 mm³/g, a mean pore radius of 131 Angstroms, a porosity of 54.4 % and a plate thickness of 0.81 mm.

Table 1 demonstrates the activities of plate catalysts produced in accordance with the method of the present invention.

**Table 1**

| **Catalytic Activity** | **Example 1** | **Example 2** |
|---|---|---|
| kNOx (m/h) | 44.9 | 43.9 |
| ηSO₂ (%) | 1.18 | 0.76 |
| ηHg (%) | 68.6 | 55.9 |

Samples of plate catalysts measuring 25x400 mm were placed with 6.5 mm distance into a sample holder and tested for their NOx activity, Hg oxidation and SO₂ oxidation according to the conditions set out in Table 2 below. The gas composition for NOx activity testing, SO₂ oxidation and Hg oxidation set out in Table 2 also comprised N₂ in a balance amount. The first sample was a plate catalyst where vanadium was applied by spray coating a vanadium-containing solution onto the laminate as per Example 1 and so in accordance with the present invention. The second sample was of a plate catalyst where vanadium was applied by spray coating a vanadium containing solution onto the laminate as per Example 2 and so in accordance with the present invention. By way of comparative examples, the third sample was a plate catalyst where vanadium was applied by impregnation (dipping) and the fourth sample was a plate catalyst formed by the use of a vanadium containing paste as in the state of the art. The data from testing these four samples is shown in Figures 3 to 5.

**Table 2**

| | NOx activity testing conditions | SO₂ oxidation activity testing conditions | Hg oxidation activity testing conditions |
|---|---|---|---|
| GHSV (/hr) | 15400 | 3500 | 6240 |
| Temperature (°C) | 350 | 400 | 380 |
| c(NO) (ppmV, dry) | 400 | 0 | 60 |
| c(NH₃) (ppmV, dry) | 400 | 0 | 24 |
| c(SO₂) (ppmV, dry) | 500 | 500 | 425 |
| c(O₂) (Vol%, dry) | 5.0 | 5.0 | 6 |
| c(H₂O) (Vol%, wet) | 10.0 | 10.0 | 11 |
| c(HCI) (ppmV, dry) | 5.0 | 5.0 | 15 |
| c(Hg) (ppmV, dry) | 0 | 0 | 25 |

Figure 3 is a graph of loading of V₂O₅ in wt% against NOx activity and includes data for the first, second, third and fourth samples discussed above. In Figure 3, the first and second samples are labelled as "Spray", the third sample is labelled as "Impregnation" and the fourth sample labelled as "TiMoLS Std". As can be seen from Figure 3, applying the vanadium by spray coating a vanadium-containing solution achieves improved NOₓ activity with the same loading of V₂O₅ compared to plate catalysts formed by the use of a vanadium containing paste. Equivalent NOₓ activity is achieved with a lower loading of V₂O₅ compared to plate catalysts formed by a vanadium containing paste. Performance of the spray-coated plates was seen to be more consistent than performance of impregnated (dipped) plates.

Figure 4 is a graph of loading of V₂O₅ in wt% against efficiency of mercury removal and includes data for the first, second, third and fourth samples discussed above. In Figure 4, the first and second samples are labelled as "Spray", the third sample is labelled as "Impregnation" and the fourth sample labelled as "TiMoLS Std". Figure 4 demonstrates improved mercury oxidation activity with the same loading of V₂O₅ for catalysts of the present invention formed by spray coating a vanadium-containing solution compared to plate catalysts formed by the use of a vanadium containing paste. Equivalent mercury oxidation activity is achieved with a lower loading of V₂O₅ compared to plate catalysts formed by a vanadium containing paste. Performance of the spray-coated plates was seen to be more consistent than performance of impregnated (dipped) plates.

Figure 5 is a graph of the rate constant for NOx activity against percentage of SO₂ oxidation and includes data for the first, second, third and fourth samples discussed above. In Figure 5, the first and second samples are labelled as "Spray", the third sample is labelled as "Impregnation" and the fourth sample labelled as "TiMoLS Std". Figure 5 demonstrates that a catalyst having the same NOx activity has reduced formation of sulphur dioxide for catalysts of the present invention formed by spray coating a vanadium-containing solution after lamination compared to those formed by a vanadium containing paste. Performance of the spray-coated plates was seen to be more consistent than performance of impregnated (dipped) plates.

### Examples 3 to 5

Examples 3, 4 and 5 were prepared according to the method of the present invention. In more detail, Examples 3, 4 and 5 were prepared by applying a vanadium-free catalyst-support paste to a mesh support formed of stainless steel and laminating the paste onto the mesh support using a pair of opposing rollers. The laminate was then sprayed with a vanadium-containing solution. The spray-coated laminate was then shaped to form convex and concave notches, as shown in Figure 2, and divided into a plurality of plate precursors. The plurality of plate precursors were stacked and secured together and then dried and calcined. The plurality of plate precursors were dried at room temperature for 48 hours and calcined for one hour at 580°C . The mesh support was moved through the apparatus shown schematically in Figure 1 at a lamination line speed of 2.4 m/min.

For preparing Example 3, the vanadium-free catalyst-support paste had a similar composition to the vanadium-free catalyst support paste employed in Examples 1 and 2. The vanadium-containing solution was a vanadium sulfate solution (VOSO₄) that was not diluted. The vanadium-containing solution consisted of vanadium sulphate and water.

For preparing Example 4, the vanadium-free catalyst-support paste had a similar composition to the vanadium-free catalyst support paste employed in Examples 1 and 2.. The vanadium-containing solution was a vanadium sulfate solution (VOSO₄) diluted with water with a ratio of vanadium sulphate solution:water of 1:1. The vanadium-containing solution consisted of vanadium sulphate and water.

For preparing Example 5, the vanadium-free catalyst-support paste had a similar composition to the vanadium-free catalyst support paste employed in Examples 1 and 2.. The vanadium-containing solution was a vanadium sulfate solution (VOSO₄) diluted with water with a ratio of vanadium sulphate solution:water of 1:2. The vanadium-containing solution consisted of vanadium sulphate and water.

Figures 6 to 8 show spectra demonstrating the loading of vanadium in wt% relative to the depth of the plate catalyst for Examples 3, 4 and 5.

It can be seen from Figures 6 to 8 that the catalysts according to the present invention have a significant concentration of vanadium at the surfaces of the plate precursors forming the plate catalyst. This leads to improved NOx activity and mercury oxidation activity, since these reactions are mass transfer limited, as discussed above. Furthermore, by concentrating the vanadium near the surfaces of each plate catalyst, the loading of vanadium can be reduced whilst maintaining the same NOx activity and mercury oxidation activity. This reduced loading of vanadium leads to reduced activity of the undesired side reaction, such as oxidation of sulphur dioxide, which are not mass transfer limited and instead take place in the entire body of the plate precursor, as discussed above. As shown in Figures 6 to 8, the vanadium penetrates to depth/thickness of at least 50 µm, typically 50-100 µm. The remainder of each plate precursor, and so thus the remainder of the plate catalyst, is substantially free of vanadium. Preferably, the vanadium penetrates to a depth/thickness of approximately 100 µm, as shown in Figures 6 and 7. In other embodiments the vanadium may penetrate to a depth/thickness of 100-200 µm.

Although preferred embodiments of the invention have been described herein in detail, it will be understood by those skilled in the art that variations may be made thereto without departing from the scope of the invention or of the appended claims.

## Claims

1. A method for the manufacture of a plate catalyst, the method comprising:
providing a mesh support;
providing a vanadium-free catalyst-support paste;
providing a vanadium-containing solution;
laminating the vanadium-free catalyst-support paste onto the mesh support to provide a laminate having first and second opposite surfaces;
spraying the vanadium-containing solution onto the first and second surfaces to form a spray-coated laminate;
shaping and dividing the spray-coated laminate into a plurality of plate precursors; and
drying and calcining the plurality of plate precursors to form a plate catalyst.

2. The method of claim 1, wherein the vanadium-free catalyst-support paste comprises one or more components selected from:
(i) a support material, preferably TiO₂;
(ii) an organic binder, preferably cellulose;
(iii) an inorganic binder, preferably clay;
(iv) ammonia;
(v) water;
(vi) a pore former, preferably ammonia carbonate or polymer particles.

3. The method of any preceding claim, wherein the vanadium-free catalyst-support paste is laminated onto the mesh support with at least one pair of opposing rollers.

4. The method of any preceding claim, wherein the vanadium-containing solution comprises vanadyl sulphate or vanadyl oxylate.

5. The method of any preceding claim, wherein the vanadium-containing solution comprises from 5 to 15wt% vanadium.

6. The method of any preceding claim, wherein the plurality of plate precursors are stacked and preferably secured in a frame before drying and calcining

7. The method of any preceding claim, wherein the step of shaping the laminate involves notching so that the plate precursors can be stacked in a configuration whereby cavities are maintained between adjacent plate precursors.

8. The method of any preceding claim, wherein the first and second surfaces are arranged vertically during the step of spraying.

9. An apparatus for the manufacture of the plate catalyst according to any of the preceding claims, the apparatus comprising:
a pair of opposing rollers for receiving the mesh support;
a supply feed for applying the vanadium-free catalyst-support paste to the mesh support upstream of the rollers;
a drier to dry the laminate downstream of the rollers;
a pair of opposing spray-applicators to apply the vanadium-containing solution onto opposite surfaces of the laminate downstream of the drier;
a notching tool for notching the spray-coated laminate;
a cutting tool for cutting the spray-coated laminate; and
an oven for drying and calcining the plate precursors to form the plate catalyst.

10. A plate catalyst obtainable by the method according to any preceding claim.
